(19) Europäisches Patentamt
European Patent Office
Office européen des brevets

(11) **EP 4 468 211 A1**

(12) **EUROPEAN PATENT APPLICATION**

(43) Date of publication:
**27.11.2024 Bulletin 2024/48**

(21) Application number: 23175147.0

(22) Date of filing: **24.05.2023**

(51) International Patent Classification (IPC):
**G06N 10/40** $^{(2022.01)}$    **G06N 10/70** $^{(2022.01)}$

(52) Cooperative Patent Classification (CPC):
**G06N 10/40;** G06N 10/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Alice & Bob**
**75015 Paris (FR)**

(72) Inventors:
• **RUIZ, Diego**
  **75015 Paris (FR)**
• **COHEN, Joachim**
  **75015 Paris (FR)**

(74) Representative: **Cabinet Netter**
  **36, avenue Hoche**
  **75008 Paris (FR)**

(54) **A QUANTUM SYSTEM FOR STABILIZING A BOSONIC QUBIT**

(57)    The invention relates to a quantum system (1) for stabilizing a bosonic qubit comprising:
- a command circuit (5) including three microwave sources (11, 13, 15), and
- a non-linear superconducting quantum circuit (3) including a four-wave mixing non-linear element (7) and a resonant portion (9), the quantum circuit (3) having a first and a second modes with a first and a second resonant frequencies $f_a$, $f_b$ respectively.

The quantum circuit (3) is arranged to engineer a Hamiltonian H expressed as $H/\hbar = g_2(a^2 + \lambda a^\dagger a - $

$\alpha^2)b^\dagger$ + h. c., the Hamiltonian H yielding through dissipation of the second mode an effective dissipator $D[a^2 + \lambda a^\dagger a - \alpha^2]$ which stabilizes the bosonic qubit.

To this end, the first microwave source (11) delivers radiation at a frequency equal to $|2f_a - f_b|$, the second microwave source (13) delivers radiation at a frequency equal to $f_b$, and the third microwave source (15) delivers radiation at a frequency equal to $f_b$ to drive the second mode.

EP 4 468 211 A1

FIG. 1

**Description**

The field of the invention relates to stabilizing a bosonic qubit.

Generally speaking, superconducting qubits can be implemented as two-level systems of superconducting electronic circuits. Such qubits can be stored in bosonic modes and thus form a particular class of superconducting qubits known as bosonic qubits.

More particularly, it is known from the state of the art that it is possible to stabilize cat qubits, i.e. bosonic qubits defined by two quasi-classical states of the bosonic mode. To this end, a conventional dissipative stabilization may be performed and consists in engineering a non-linear conversion between two photons of a first mode - also known as cat qubit mode - that hosts a stabilized quantum manifold and one photon of a second mode - also known as buffer mode. The cat qubits have the advantage of having a bit-flip rate that decreases exponentially while the phase-flip rate increases only linearly. As a result, stabilized cat qubits benefit from a high noise bias, which means that the bit-flip probability is much smaller than the phase-flip probability.

Due to their noise structure, cat qubits can be concatenated with a repetition code instead of the usual surface code used for usual superconducting qubits. However, it appears that the noise bias of the cat qubits may not be sufficient to use a simple repetition code for some large-scale algorithms and there is therefore a need to find bosonic qubits with an even higher noise bias.

For this purpose, recent studies have focused on a particular class of cat qubits: the squeezed cat qubits. For instance, Q. Xu et al. (2022) have proposed, in the article "Autonomous quantum error correction and fault-tolerant quantum computation with squeezed cat qubits" (arXiv:2210.13406) to implement an autonomous quantum error correction (AQEC) scheme using squeezed cat code against the dominant error source, excitation loss, in continuous-variable systems. This article announces a noise bias of about $10^{-15}$ with only a mean number of four photons to encode the cat-states. As a further example, T. Hillmann et al. (2022) propose and analyze, in the article "Quantum error correction with dissipatively stabilized squeezed cat qubits" (arXiv:2210.13359, Phys. Rev. A 107, 032423), the error correction performance of a dissipatively stabilized squeezed cat qubit.

However, the possibility of stabilizing a squeezed cat qubit faces several obstacles in practice and thus remains purely theoretical as of today. In particular, such a stabilization would require to engineer a multitude of Hamiltonian terms to yield the desired dissipator and thus to use too many pumps to the point of threatening the stability of the system. It can be added that one of these terms, $a^{\dagger 2}b^{\dagger}$, where $a$ is the photon annihilation operator of the first mode and b is the photon annihilation operator of the second mode, requires the injection of a high amount of energy in the system that jeopardizes the coherence of the system.

The present invention seeks to improve the situation

To this end, the Applicant proposes a quantum system for stabilizing a bosonic qubit comprising:

- a command circuit including a first microwave source, a second microwave source and a third microwave source each for delivering microwave radiation, and
- a non-linear superconducting quantum circuit including a four-wave mixing non-linear element and at least one resonant portion to which the four-wave mixing non-linear element is connected, the non-linear superconducting quantum circuit having a first mode with a first resonant frequency and a second mode with a second resonant frequency, the second mode being dissipative.

The four-wave mixing non-linear element is arranged such that, when

- the first microwave source delivers radiation at a frequency equal to the absolute value of the difference between twice the first resonant frequency and the second resonant frequency to parametrically drive the four-wave mixing non-linear element,
- the second microwave source delivers radiation at a frequency equal to the second resonant frequency to parametrically drive the four-wave mixing non-linear element, and
- the third microwave source delivers radiation at a frequency equal to the second resonant frequency to the a least one resonant portion to drive the second mode, with the respective phases of the second microwave source and the third microwave source being substantially equal to each other,

the non-linear superconducting quantum circuit engineers a Hamiltonian H expressed as

$$H/\hbar = g_2(a^2 + \lambda a^{\dagger}a - \alpha^2)b^{\dagger} + \text{h.c.}$$

, where $g_2$ is the amplitude of the first microwave source, $a$ is the annihilation operator of the first mode, $\lambda$ is a complex number which phase and amplitude result from the amplitude of the radiation induced by the second microwave source, $\alpha$ is a complex number resulting from the third microwave source, $b$ is the annihilation operator of the second mode, and h. c. is the Hermitian conjugate, the Hamiltonian H yielding through dissipation of the second mode an effective dissipator $D[a^2 + \lambda a^\dagger a - \alpha^2]$ which stabilizes a two-dimensional manifold hosting the bosonic qubit.

According to one or more embodiments, the four-wave mixing non-linear element is an asymmetrically threaded superconducting quantum interference device having flux lines through which radiation can be delivered to modulate a common flux and/or a differential flux.

According to one or more embodiments, the asymmetrically threaded superconducting quantum interference device has flux lines through which radiation can be delivered to modulate at least the common flux, and the first microwave source and the second microwave source are both arranged to deliver radiation through the flux lines to modulate the common flux at frequencies respectively equal to the absolute value of the difference between twice the first resonant frequency and the second resonant frequency and the second resonant frequency.

According to one or more embodiments, the asymmetrically threaded superconducting quantum interference device has flux lines through which radiation can be delivered to modulate at least the differential flux, and the third microwave source is arranged to deliver radiation through the flux lines to modulate the differential flux at a frequency equal to the second resonant frequency to drive the second mode.

According to one or more embodiments, the third microwave source is arranged to deliver radiation at a frequency equal to the second resonant frequency to drive the second mode.

According to one or more embodiments, the second microwave source is arranged to deliver radiation whose amplitude causes $\lambda$ to have an amplitude less than or equal to 1.

Advantageously, the second microwave source is arranged to deliver radiation whose amplitude causes $\lambda$ to have an amplitude substantially equal to 1.

According to one or more embodiments, the respective phases of the first mode and the second mode across the four-wave mixing non-linear element each have a zero-point fluctuation $\varphi_a$, $\varphi_b$, and the ratio $\dfrac{\varphi_b}{\varphi_a}$ is less than 3.

The present invention also relates to a method for stabilizing a bosonic qubit performed by the quantum system described above and comprising the following operations:

- delivering, by the first microwave source, radiation at a frequency equal to the absolute value of the difference between twice the first resonant frequency and the second resonant frequency to parametrically drive the four-wave mixing non-linear element,
- delivering, by the second microwave source, radiation at a frequency equal to the second resonant frequency to parametrically drive the four-wave mixing non-linear element,
- delivering, by the third microwave source, radiation at a frequency equal to the second resonant frequency to the a least one resonant portion to drive the second mode, with the respective phases of the second microwave source and the third microwave source being substantially equal to each other.

The implementation of this method causes the non-linear superconducting quantum circuit to engineer a Hamiltonian H expressed as $$H/\hbar = g_2(a^2 + \lambda a^\dagger a - \alpha^2)b^\dagger + \text{h. c.}$$ , where $g_2$ is the amplitude of the first microwave source, $a$ is the annihilation operator of the first mode, $\lambda$ is a complex number which phase and amplitude result from the amplitude of the radiation induced by the second microwave source, $\alpha$ is a complex number resulting from the third microwave source, $b$ is the annihilation operator of the second mode, and h. c. is the Hermitian conjugate, the Hamiltonian H yielding through dissipation of the second mode an effective dissipator $D[a^2 + \lambda a^\dagger a - \alpha^2]$ which stabilizes a two-dimensional manifold hosting the bosonic qubit.

Other features and advantages of the invention will become apparent from the following description provided for indicative and non-limiting purposes, with reference to the accompanying drawings, wherein:

- Figure 1 schematically illustrates a quantum system comprising a non-linear superconducting quantum circuit and a command circuit according to the invention,

- Figure 2 illustrates the respective Wigner functions of a standard cat qubit and a bosonic qubit stabilized by the system of figure 1,

- Figure 3 illustrates a more explicit diagram of the quantum system of figure 1,

- Figure 4 illustrates a partial electrical equivalent diagram of a first embodiment of the non-linear superconducting quantum circuit, only an ATS and two resonant portions of the latter being shown,

- Figure 5 illustrates a partial electrical equivalent diagram of a second embodiment of the non-linear superconducting quantum circuit, only an ATS and two resonant portions of the latter being shown,

- Figure 6 partially illustrates an embodiment of the quantum system,

- Figure 7 partially illustrates another embodiment of the quantum system,

- Figure 8 illustrates the bit-flip rate of the bosonic qubit stabilized by the quantum system of figure 1 as a function of the number of photons,

- Figure 9 illustrates the non-adiabatic errors of the quantum system of figure 1 resulting from the implementation of a Z gate,

- Figure 10 illustrates a comparison of the non-adiabatic errors between the bosonic qubit stabilized by the quantum system of figure 1 and a theoretical squeezed cat qubit, and

- Figure 11 illustrates the bit-flip rate of the bosonic qubit stabilized by the quantum system of figure 1 as a function of the ratio of the respective zero-point fluctuations of the superconducting phase of the bosonic qubit mode and the buffer mode.

The drawings and the following description are comprised for the most part of positive and well-defined features. As a result, they are not only useful in understanding the invention, but they can also be used to contribute to its definition, should the need arise.

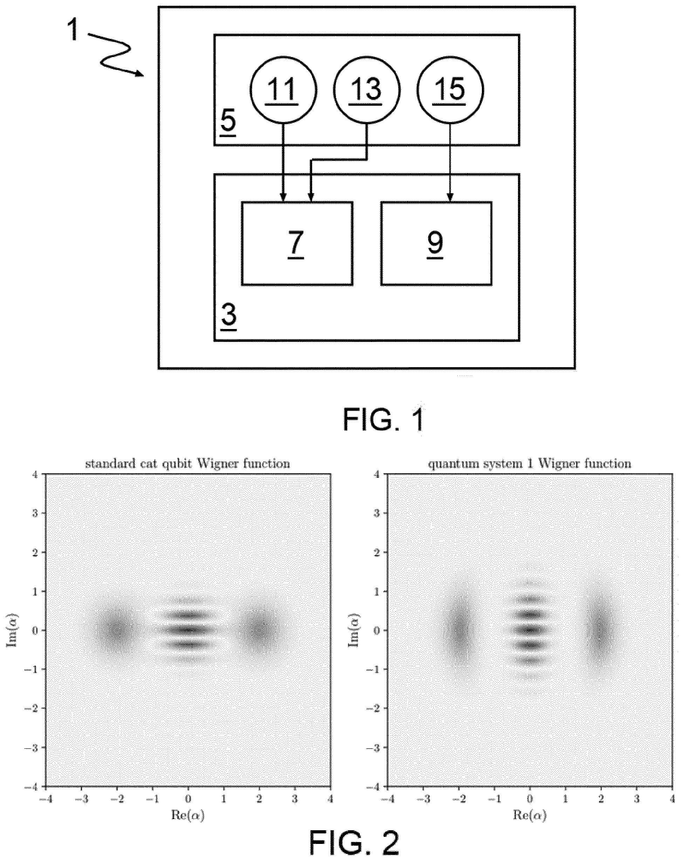

Figure 1 illustrates a schematic diagram of a quantum system 1.

The quantum system 1 is arranged to stabilize a bosonic qubit.

So far, the Applicant's work has been generally concerned with the stabilization of a particular class of bosonic qubits: the cat qubits, i.e. formed by the superposition of two quasi-classical states of the bosonic mode. The possibility of realizing such a qubit has been demonstrated by R. Lescanne et al. in "Exponential suppression of bit-flips in a qubit encoded in an oscillator" (Nature Physics, 2020). The cat qubits rely on a mechanism that dissipates photons in pairs. This process pins down two computational states to separate locations in phase space. By increasing this separation, an exponential decrease of the bit-flip rate can be achieved while only linearly increasing the phase-flip rate.

A cat qubit is defined as a specifically selected two-dimensional sub-manifold of a main manifold spanned by several coherent states. In the following, the two-component cat qubit, whose manifold is the span of two coherent states with equal amplitude and opposite phase, is looked at.

A cat state $|C_\alpha^\pm\rangle$ is a superposition of two coherent states $|\alpha\rangle$ and $|-\alpha\rangle$ and can thus be written as follows:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is much smaller than the phase-flip probability. More precisely, an effective error channel (e.g., bit errors or "bit-flips") is suppressed in an exponential way with the "size" - i.e. the average number of photons $\bar{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of quantum superconducting circuits have observed this exponential suppression of bit-flip errors with the average number of photons in the cat states.

The cat qubits can be stabilized or confined by the following exemplary schemes:

a) a dissipative stabilization, with jump operator $L_2 = \sqrt{\kappa_2}(a^2 - \alpha^2)$ , where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device (typically a Josephson junction or an ATS - asymmetrically threaded superconducting quantum interference device) to the cat qubit mode and by engineering the Hamiltonian $H/\hbar = g_2(a^2 - \alpha^2) b^\dagger + $ h. c., where b is the photon annihilation operator of the buffer mode with a pump at frequency $|2f_a - f_b|$ and a drive on the buffer mode at frequency $f_b$ provided $g_2 < \kappa_b$.

b) a Kerr Hamiltonian $H/\hbar = \frac{K}{2}(a^{\dagger 2} - \alpha^2)\left(a^2 - \overline{\alpha^2}\right)$ , where $K$ is the complex amplitude of the Kerr Hamiltonian, $a$ is the photon annihilation operator, and $\alpha^2$ is the mean photon number.

c) a detuned Kerr Hamiltonian $H/\hbar = \frac{K}{2}(a^{\dagger 2} - \alpha^2)\left(a^2 - \overline{\alpha^2}\right) - \Delta a^\dagger a$ , where $K$ is the complex amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+ + h.c$ , where $g_2$ is the complex amplitude of the TPE Hamiltonian, $a$ is the photon annihilation operator, $\alpha$ is a complex number defining the cat qubit, and $\sigma_\pm$ are the lowering and raising operators of the two-level system. This Hamiltonian can be engineered in the same way as the dissipative stabilization a).

e) a resonant dissipative stabilization, with jump operator $L_2 = \sqrt{\kappa_2}(a^2 - \alpha^2)$ , where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/\hbar = g_2(a^2 - \alpha^2)b^\dagger + $ h. c. , where b is the photon annihilation operator of the buffer mode provided the mode frequencies verify substantially $2f_a = f_b$ and $g_2 < \kappa_b$ to which a drive on the buffer mode at frequency $f_b$ is added.

Cat qubits have the property to allow the realization of quantum gates such as the Z or the CNOT gate while maintaining the previously mentioned noise bias. The characteristics which are used to assess the quality of a quantum gate are its execution time, i.e. the time for the quantum gate to operate, and the associated error probability. For cat qubits, the phase-flip error probability at the optimal time of the gate depends on the ratio $\kappa_1/\kappa_2$ , where $\kappa_1$ is the single photon loss rate - or error rate since it leads to phase-flip errors - of the cat qubits used to perform the quantum gate, and $\kappa_2$ is the two-photon dissipation rate - also called correction or stabilization rate - of the cat qubits used to perform the quantum gate.

The smaller $\kappa_1/\kappa_2$ is, the better the gate fidelity gets.

In the field of cat qubits, it is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

However, even if the cat qubit has a high noise bias, which is a particularly advantageous feature in the perspective of realizing a quantum error correction and thus designing a reliable quantum computer, it appears that such a noise bias might not be enough for large-scale quantum algorithm with a simple repetition code. In this context, it was recently highlighted that a particular family of cat qubits have an even higher noise bias: the squeezed cat qubits.

In addition, the squeezed cat states also have less non-adiabatic errors during the period of time of a quantum gate, such as a Z gate or a CNOT gate. Overall, reducing the non-adiabatic errors allows to reduce the requirement on the ratio $\kappa_1/\kappa_2$.

The squeezed states $|\alpha, \xi\rangle$ are defined as:

$$|\alpha, \xi\rangle = D(\alpha)S(\xi)|0\rangle$$

with $D(\alpha)$ the displacement operator:

$$D(\alpha) = e^{\alpha a^\dagger - \alpha^* a}$$

And $S(\xi)$ the squeezing operator:

$$S(\xi) = e^{\frac{1}{2}[(\xi^* a^2 - \xi a^{\dagger^2})]}$$

where $\xi$ is the complex squeezing parameter with norm r = $|\xi|$.

The squeezed cat states are defined as the coherent superposition of two squeezed states with opposite displacement amplitudes and identical squeezing:

$$|C_{\alpha,\xi}^\pm\rangle = \frac{1}{N_{\alpha,\xi}^\pm}(|\alpha, \xi\rangle \pm |-\alpha, \xi\rangle)$$

where: $N_{\alpha,\xi}^\pm$ is a normalization constant.

Note that to have proper squeezed cat states the complex phase of $\alpha$ and $\xi$ must follow:

$$\alpha = |\alpha|e^{i\theta}$$

$$\xi = re^{2i\theta}$$

The dissipative squeezing stabilization is based on the following jump operator:

$$L_{SC} = \sqrt{\kappa_2}\left(\left(\cosh(r)a + \sinh(r)e^{i\theta}a^\dagger\right)^2 - \alpha^2\right)$$

where $\kappa_2$ is the two-photon dissipation rate, *a* is the photon annihilation operator, $\alpha$ is a complex number defining the cat qubit, r and $\theta$ are the modulus and argument of the complex squeezing parameter $\xi$ = $re^{i\theta}$.

This jump operator can be realized by coupling a lossy buffer mode b with dissipation rate $\kappa_b$, and a four-wave mixing device - typically a Josephson junction or an ATS - to the cat qubit mode and by engineering the Hamiltonian $H/\hbar = g_2 L_{SC} b^\dagger + \text{h.c.}$, where b is the photon annihilation operator of mode b.

While the dissipation of the cat qubit is of the form $D[a^2 - \alpha^2]$, that of the theoretical squeezed cat qubit is of the following more complicated form $D[\cosh(r)^2 a^2 + \sinh(r)^2 a^{\dagger 2} + \cosh(r)\sinh(r)(2a^{\dagger}a + 1) - \alpha^2]$, where $\xi$ and $\alpha$ are assumed to be real numbers without loss of generality. More particularly, the dissipative squeezing stabilization is engineered through the interaction term $[\cosh(r)^2 a^2 + \cosh(r)\sinh(r)(2a^{\dagger}a + 1) + \sinh(r)^2 a^{\dagger 2} - \alpha^2]\, b^{\dagger} + \text{h. c.}$

Consequently, the theoretical implementation of the stabilization of the squeezed cat qubit relies on generating four particular terms:

i) $a^2 b^{\dagger}$: this first term simply corresponds to the non-linear conversion between two photons of a first mode a - the memory - and one photon of a second mode b - the buffer. As previously mentioned in exemplary scheme a) for standard cat qubits, this term requires a pump at a frequency $|2f_a - f_b|$ where $f_a$ is the resonant frequency of the first mode a and $f_b$ is the resonant frequency of the second mode b.

ii) $a^{\dagger}ab^{\dagger}$: this second term corresponds to a longitudinal coupling between the first mode a and the second mode b. This term can be obtained with a pump at a frequency $f_b$.

iii) $a^{\dagger 2}b^{\dagger}$: this third term requires a pump at a frequency $2f_a + f_b$.

iv) $\alpha^2 b^{\dagger}$: this fourth term requires the drive on the second mode b at a frequency $f_b$.

It must be noted that a standard cat qubit is stabilized by only generating the first term $a^2 b^{\dagger}$ and the fourth term $\alpha^2 b^{\dagger}$.

However, a considerable obstacle to the use of squeezed cat qubits is the difficulty of engineering such a dissipative squeezing stabilization. This obstacle is above all due to the multiplicity of terms to be engineered using pumps, which jeopardizes the stability of the system, increases thermal population or reduces coherence times. In addition, it must be noted that the generation of the third term requires a very high frequency $2f_a + f_b$, around 15 gigahertz (GHz) assuming that the frequencies $f_a$ and $f_b$ are each typically of 5 gigahertz (GHz). The amount of energy to be injected into the system to reach such a frequency has detrimental effects on the coherence of the system. Moreover, the phase and amplitude of the pump at frequency $2f_a + f_b$ - for generating the third term $a^{\dagger 2}b^{\dagger}$ - must be precisely tuned with respect to the phase and amplitude of the pump at frequency $f_b$ - for generating the second term $a^{\dagger}ab^{\dagger}$ - and the drive on the second mode b at frequency $f_b$ - for generating the fourth term $a^2 b^{\dagger}$.

Therefore, it appears that squeezed cat qubits, although theoretically offering a higher noise bias than cat qubits, are currently not possible to stabilize due to the multiple difficulties of implementing the required dissipation. On the other hand, cat qubits are possible to stabilize but impose extreme conditions of use to achieve a sufficient noise bias and thus run a large-scale quantum algorithm. This fact was the subject of a recent publication by E. Gouzien et al. (2023): "Computing 256-bit Elliptic Curve Logarithm in 9 Hours with 126133 Cat Qubits" (arXiv:2502.06639).

The quantum system 1 makes it possible to implement the stabilization of a particular bosonic qubit whose performances are comparable to those - which remain theoretical - of a squeezed cat qubit.

As illustrated in figure 1, the quantum system 1 comprises a non-linear superconducting quantum circuit 3 and a command circuit 5.

The non-linear superconducting quantum circuit 3 is arranged to enable four-wave mixing between a first mode a and a second mode b. In the following, the first mode a hosts a bosonic qubit, and is also known as the bosonic qubit mode or memory mode, while the second mode b is dissipative and is used as a buffer in between the bosonic qubit and the environment.

The first mode a and the second mode b each correspond to natural resonant frequencies of the non-linear superconducting quantum circuit 3. Consequently, the first mode a and the second mode b each have a respective resonant frequency. The first mode a has a resonant frequency $f_a = \dfrac{\omega_a}{2\pi}$ and the second mode b has a resonant frequency $f_b = \dfrac{\omega_b}{2\pi}$, where $\omega_a$ and $\omega_b$ are the respective angular frequencies of the first mode a and the second mode b. By "having" a first mode and a second mode, it should be understood here that the non-linear superconducting quantum circuit 3 comprises components operating in a superconducting regime which host the modes independently of each other or concurrently. In other words, the first mode a and the second mode b may be hosted in different subsets of components of the superconducting circuit or on the same subset of components.

The non-linear superconducting quantum circuit 3 is intended to be subject to parametric pumping from the command circuit 5 in order to engineer various non-linear interaction between the two modes. The frequency of the pump is tuned to select specific terms within the rotating wave approximation.

As detailed below, the non-linear superconducting quantum circuit 3 is intended to interact with the command circuit 5 for engineering a particular Hamiltonian H yielding, through dissipation of the second mode b, an effective dissipator which stabilizes a two-dimensional manifold hosting the bosonic qubit.

Such a Hamiltonian H can be expressed in the following form:

$$H/\hbar = g_2(a^2 + \lambda a^\dagger a - \alpha^2)b^\dagger + \text{h.c.}$$

Each term of the Hamiltonian H will be explained and detailed below.

The non-linear superconducting quantum circuit 3 comprises a four-wave mixing non-linear element 7 and at least one resonant portion 9.

The four-wave mixing non-linear element 7 is arranged to be parametrically driven by the command circuit 5 to cause the non-linear superconducting quantum circuit 3 to engineer the required Hamiltonian H for stabilizing the bosonic qubit.

The four-wave mixing non-linear element 7 is for instance an asymmetrically threaded superconducting quantum interference device - or ATS hereinafter. It is known to the skilled person that an ATS can be used to engineer the 2-to-1 photon conversion, i.e. the first term of the Hamiltonian H, in order to perform a dissipative stabilization, as successfully shown by R. Lescanne *et al.* (2020).

First implementations of this stabilization scheme - Z. Leghtas et al. (2015) in the article "Confining the state of light to a quantum manifold by engineered two-photon loss" (Science, Vol. 347, No. 6224) and S. Touzard et al. (2018) in the article "Coherent Oscillations inside a Quantum Manifold Stabilized by Dissipation" (Physical Review X 8, 023005) were unsuccessful to observe the exponential suppression of bit-flips because the superconducting circuit element used as a four-wave mixer, a so-called transmon with a single Josephson junction, has spurious cross-Kerr terms which induce additional noise processes with escape rates given by the very large transmon-cat-qubit dispersive shift.

The ATS design has much lower cross-Kerr terms than the transmon, which allowed to observe the exponential suppression of bit-flips.

Typically, the ATS has flux lines through which radiation can be delivered to modulate a common flux and/or a differential flux.

In the embodiment discussed here, the non-linear superconducting quantum circuit 3 comprises a four-wave mixing non-linear element 7 - typically an ATS - which makes it possible to engineer 2-to-1 photon conversion between the first mode a - or memory mode - and the second mode b - or buffer mode - by parametrically pumping at the frequency $f_p = |2f_a - f_b|$. Advantageously, the pump frequency satisfies $f_p \gg g_2$ to make this parametric pumping work as well as possible.

The particular situation where $2f_a = f_b$ ($f_p = 0$) is called the resonant case and may be advantageous, as developed in the European patent application EP 21306965.1 filed by the Applicant. However, in such a resonant case, the 2-to-1 photon conversion cannot be activated by parametrically pumping a four-wave mixing non-linear element. Instead, a three-wave mixing non-linear element should be used. As we will see later, the longitudinal term of the Hamiltonian H still requires four-wave mixing to be engineered. Hence, the resonant situation, although compatible with the proposed bosonic qubit stabilization requires an extra three-wave mixing non-linear element. In other words, the resonant case requires having both three-wave mixing and four-wave mixing to generate the first term $a^2b^\dagger$ and the second term $a^\dagger ab^\dagger$, respectively. The three-wave mixing can arise by operating the ATS at a different flux point than the $0 - \pi$ flux point it is usually operated at or by adding another non-linear element as described in the above-mentioned European patent application EP 21306965.1.

In the present invention, the Applicant proposes to use a single four-wave mixing non-linear element to stabilize the bosonic qubit hence the advantage of verifying $|2f_a - f_b| \gg g_2$ or being outside the resonant regime for the 2-to-1 photon conversion.

The resonant portion 9 is arranged to be connected to the four-wave mixing non-linear element 7 to provide the non-linear superconducting quantum circuit 3 with the first mode a and the second mode b having respective resonant frequencies $f_a$ and $f_b$. More particularly, the first mode a and the second mode b "participate" in the four-wave mixing non-linear element 7, which means that a portion or the entirety of the mode magnetic energy is stored in the four-wave mixing non-linear element 7. Such a participation can be quantified by the zero-point fluctuation of the superconducting phase across the ATS, noted $\varphi_a$ for the first mode a and $\varphi_b$ for the second mode b.

In the schematic diagram of the quantum system 1 illustrated in figure 1, the non-linear superconducting quantum system 3 comprises only one resonant portion, i.e. the resonant portion 9. However, it should be understood here that the non-linear superconducting quantum system 3 comprises at least one resonant portion, and typically two resonant portions to eventually form two electromagnetic modes.

The command circuit 5 is arranged to deliver microwave radiations.

In the context of the quantum system 1, the command circuit 5 is arranged to drive the second mode b by delivering radiation at a frequency equal to the second resonant frequency $f_b$ to the resonant portion 9 and to parametrically drive the four-wave mixing non-linear element 7 at several frequencies at once.

To this end and as illustrated in figure 1, the command circuit 5 comprises a first microwave source 11, a second microwave source 13 and a third microwave source 15.

The first microwave source 11 is arranged to parametrically drive the four-wave mixing non-linear element 7. More particularly, the first microwave source 11 is used to implement a parametric pump delivering radiation at the frequency $|2f_a - f_b|$.

The second microwave source 13 is also arranged to parametrically drive the four-wave mixing non-linear element 7. More particularly, the second microwave source 13 is used to implement a parametric pump delivering radiation at the frequency $f_b$.

Finally, the third microwave source 15 is arranged to drive the second mode b by delivering a radiation at the frequency $f_b$ to the resonant portion 9.

As above-mentioned, the combined effect of the first microwave source 11 and the third microwave source 15 allows the non-linear superconducting quantum circuit 3, and more exactly the four-wave mixing non-linear element 7, to perform the non-linear conversion between two photons of the first mode a and one photon of the second mode b as well as the drive of the second mode b.

In view of stabilizing a two-dimensional manifold hosting the bosonic qubit, which is the purpose of the quantum system 1, such a combined effect contribute to the generation of the terms $a^2 b^\dagger$ and $\alpha^2 b^\dagger$ to the Hamiltonian H to be engineered by the non-linear superconducting quantum circuit 3.

Moreover, the parametric pump resulting from the functioning of the second microwave source 13 allows a longitudinal coupling between the first mode a and the second mode b.

The consequence of such a longitudinal coupling is the generation of the term $a^\dagger a b^\dagger$ which also contributes to the Hamiltonian H and thus to the stabilization of the two-dimensional manifold hosting the bosonic qubit.

Finally, in order to achieve the sought Hamiltonian H for stabilizing the bosonic qubit, the respective phases of the second microwave source 13 and the third microwave source 15 are substantially equal to each other. More precisely, such equality between the phase of the second microwave source 13 and the phase of the third microwave source 15 occurs at the level of the non-linear superconducting quantum circuit 3, and not at the level of the microwave sources 13 and 15.

By "substantially equal", it should be understood here that, ideally, the phase of the second microwave source 13 is strictly equal to the phase of the third microwave source 15. However, in practice, such equality is difficult to achieve. Typically, the phase of the second microwave source 13 or of the third microwave source 15 deviates by 5% from the phase of the other.

In response to the radiations delivered by the command circuit 5, the non-linear superconducting quantum circuit 3 engineers a Hamiltonian H expressed as follows:

$$H/\hbar = \mathrm{g}_2(a^2 + \lambda a^\dagger a - \alpha^2)b^\dagger + \mathrm{h.\,c.}$$

where: - $\mathrm{g}_2$ is proportional to the amplitude of the first microwave source 11,

- $a$ is the annihilation operator of the first mode a,
- $\lambda$ is a complex number which phase and amplitude result from the amplitude of the radiation induced by the second microwave source 13,
- $\alpha$ is a complex number resulting from the third microwave source 15,
- $b$ is the annihilation operator of the second mode b,
- h. c. designates the Hermitian conjugate.

In the expression of the Hamiltonian H, it should be noted that the parameters $\lambda$ and $\alpha$ are both defined relatively with respect to the first microwave source 11. In particular, the phase and the amplitude from which the complex number $\lambda$ results are each defined relative to the phase and amplitude of the first microwave source 11 respectively.

It may be noted that such a Hamiltonian H does not comprise the term $a^{\dagger 2} b^\dagger$. As explained previously, such a term would require an additional pump which, together with the already described necessary pumps and drive, increase the complexity and threaten the stability of the system. Moreover, this term implies a very high frequency - corresponding to $2f_a + f_b$ - and pumps a quantity of energy into the system which affects the coherence of the bosonic qubit.

The Hamiltonian H yields through dissipation of the second mode b an effective dissipator $D[a^2 + \lambda a^\dagger a - \alpha^2]$ which stabilizes the two-dimensional manifold hosting the bosonic qubit.

Figure 2 illustrates the respective Wigner functions of a standard cat qubit and the bosonic qubit stabilized by the quantum system 1.

It can be noted that the standard cat qubit and the bosonic qubit stabilized by the quantum system 1 have the same number of photons $\bar{n} = 4$, but the latter has a bigger separation in phase-space than the standard cat qubit, meaning the two blobs are more separated. This increased separation at the same number of photons explains the increase in the noise bias.

It can be seen that each of the two blobs has a crescent moon shape. The bosonic qubit stabilized by the quantum system 1 can thus be called a *"moon cat qubit"*.

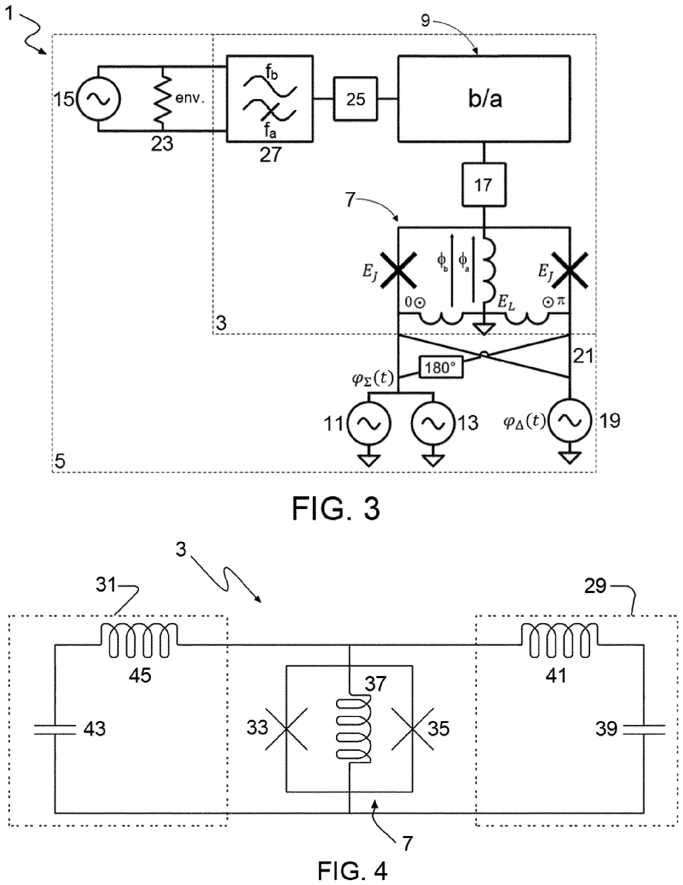

Figure 3 illustrates more explicitly the schematic diagram of figure 1.

Moreover, figure 3 corresponds to a particular embodiment in which the four-wave mixing non-linear element 7 is an ATS to which the at least one resonant portion 9, which is a linear microwave network b/a, is connected.

As a reminder, when biased at its working point flux point (0 - $\pi$ or conversely), the Hamiltonian of the ATS 7 has the following "sin-sin" form:

$$H_{ATS} = -2E_J \sin\big(\varphi_\Sigma(t)\big) \sin(\varphi) + \frac{E_L}{2}\big(\varphi - \varphi_\Delta(t)\big)^2$$

where $\varphi = \varphi_a(a + a^\dagger + \varphi_b(b + b^\dagger)$ is the total superconducting phase difference across the ATS 7, $\varphi_a$ is the zero-point fluctuation of the phase of the first mode a across the ATS 7 and $\varphi_b$ is the zero-point fluctuation of the phase of the second mode b across the ATS 7, $E_J$ is the Josephson energy of a side junction and $E_L$ is the inductive energy of a central inductance, $\varphi_\Sigma(t)$ corresponds a common flux modulation of two loops of the ATS 7 and $\varphi_\Delta(t)$ corresponds to a differential flux modulation of the two loops of the ATS 7. The former can be implemented by sending microwave radiations on flux lines of the ATS 7 out of phase, the latter can be implemented by sending microwave radiations on the two flux lines of the ATS 7 in phase. Parametric pumping of the ATS is typically done by pumping the common flux as pumping the differential flux merely displaces the modes coupled to the ATS. As an example, by pumping the common flux at the frequency $f_p = |2f_a - f_b|$, $\varphi_\Sigma(t) = \varepsilon_{2ph}\cos(2\pi f_p t)$, the non-linear resonant part of Hamiltonian writes in the rotating frame:

$$H_{ATS} = \frac{E_J \epsilon_{2ph} \varphi_a^2 \varphi_b}{2}\left(a^2 b^\dagger + \text{h.c.}\right)$$

which is typically the two-to-one photon exchange Hamiltonian needed to engineer the two-photon stabilization.

To engineer a longitudinal Hamiltonian between the first mode a and the second mode b, one needs to pump the common flux at the frequency $f_b$:

$$\varphi_\Sigma(t) = \epsilon_{lgt}\cos(2\pi f_b t)$$

In the rotating frame, the parametric part of the Hamiltonian writes:

$$H_{ATS} = -E_J \epsilon_{lgt}\varphi_b(b + b^\dagger)(1 - \varphi_a^2 a^\dagger a) + E_J \epsilon_{lgt}\frac{\varphi_b^3}{2}(b^{\dagger 2}b + b^\dagger b^2)$$

This Hamiltonian can be written as follows to highlight the desired dynamics:

$$H_{ATS} = \hbar g_2\lambda a^\dagger a(b + b^\dagger) - E_J \epsilon_{lgt}\varphi_b(b + b^\dagger) + \hbar g_2\lambda\frac{\varphi_b^2}{2\varphi_a^2}(b^{\dagger 2}b + b^\dagger b^2)$$

with $g_2\lambda = E_J \epsilon_{lgt}\varphi_b\varphi_a^2/\hbar$.

The first term corresponds to the desired longitudinal coupling.

The second term is an effective drive of the buffer at its resonant frequency. This term can be used to engineer the $\alpha^2 b^\dagger$ of the Hamiltonian H. However, since this term needs to be tuned independently of $\lambda$, the third microwave source 15 - or direct drive - is required. Alternatively, this can be performed by modulating the differential flux of the ATS via the microwave source 19. Although the amplitude and phase of the compensation drive can be computed analytically, it is fine-tuned experimentally.

The third term corresponds to a spurious and possibly detrimental non-linearity. Depending on the noise level, the bosonic qubit stabilization has to deal with, this can lead to a constraint on the ratio $\varphi_b/\varphi_a$ to ensure the last term is not too detrimental.

Provided these conditions are met, the ATS Hamiltonian can be engineered such that it is close enough to the longitudinal Hamiltonian.

Referring again to figure 3, the linear microwave network b/a is such that, when coupled via a linear coupler 17 to the ATS 7 which acts as an inductive element, the non-linear superconducting quantum circuit 3 comprises the first mode a and the second mode b at respective resonant frequencies $f_a$ and $f_b$ which participates in the ATS 7.

When an external DC magnetic field is set such that a 0 mod $2\pi$ magnetic flux threads one of the loop and a $\pi$ mod $2\pi$ flux threads the other loop, it is ensured that the ATS Hamiltonian has its "sin-sin" form. For clarity, the set-up applying the external DC magnetic field is not drawn on figure 3 but can be applied via the two bottom mutual inductances of the ATS 7. A typical implementation consists in interleaving a bias-tee connected to a DC current source to input DC current into the system while letting the microwave radiations go through.

The first microwave source 11 and the second microwave source 13 are set-up to modulate the common flux in the ATS 7. As illustrated in figure 3, the command circuit 5 further comprises a microwave source 19 set-up to modulate the differential flux in the ATS 7. Such a microwave source 19 can be used, instead of the third microwave source 15, to drive the second mode b by delivering a radiation at the required frequency $f_b$ to the resonant portion 9. In the sense of the present invention, the microwave source 19 can thus also be considered as the "third microwave source" since it can deliver a radiation at the frequency $f_b$ to drive the second mode b. As explained above, the microwave sources 15 and 19 are also used to compensate the linear drive resulting from the longitudinal coupling engineering.

To clearly distinguish the roles of the sources in the Hamiltonian, a microwave network 21 which applies the correct phase offset is shown in figure 3. Alternatively, each microwave source can be simply coupled to a single node of the ATS 7 and their relative phase and amplitude can be set so as to achieve the desired flux modulation. In that case, to modulate the common flux, the microwave sources need to address the circuit out of phase and, to modulate the differential flux, the microwave sources need to address the circuit in phase.

As explained above, when the first microwave source 11 is set at the frequency $|2f_a - f_b|$, the non-linear superconducting quantum circuit 3 performs the 2-to-1 photon conversion between the first mode a and the second mode b. To convert this 2-to-1 photon conversion into two-photon dissipation, the second mode b is selectively coupled to a load 23 via a linear coupler 25 and a microwave filter 27 configured as a band pass filter with a frequency $f_b$.

Alternatively, the microwave filter 27 may be configured as a band stop filter at a frequency $f_a$, and may be placed in between, on the one hand, the environment and, on the other hand, the first mode a and the second mode b to isolate the first mode a and thus prevents the first mode a from suffering additional losses coming from unwanted coupling to the load 23.

Alternatively, it may be configured as a low-pass (respectively high-pass) filter if $f_a > f_b$ (resp $f_b > f_a$). In other embodiments, the microwave filter 27 can be omitted when coupling between the load 23 and substantially only the second mode b can be established. Consequently, the skilled person understands that the first mode a has a high-quality factor and the second mode b has a low-quality factor.

As previously explained, the second mode b is driven at its resonant frequency $f_b$. This drive is performed by the third microwave source 15 or, alternatively, by the microwave source 19 set at frequency $f_b$.

In the above, the load 23 can be seen as part of the command circuit 5 of figure 1, while the linear coupler 25 and the microwave filter 27 can be seen as part of the non-linear superconducting quantum circuit 3.

Figures 3 and 4 illustrate electrical equivalent diagrams of respective embodiments of the non-linear superconducting quantum circuit 3 which takes the form of a galvanic circuit. Such electrical equivalent diagrams are partial since they both only represent the four-wave mixing non-linear element 7 and the linear microwave network b/a, and thus represent neither the linear coupler 25 nor the microwave filter 27. More particularly, the four-wave mixing non-linear element 7 takes the form of an ATS, while the linear microwave network b/a includes a first resonant portion 29 and a second resonant portion 31.

The ATS 7 is realized as known in the art, for example in R. Lescanne *et al.* (2020). The ATS 7 includes a first Josephson junction 33 and a second Josephson junction 35 in parallel, and an inductive element 37 in parallel between them. As a result, the ATS 7 has two connected loops, each loop comprising a Josephson junction in parallel with the shunt inductive element. The inductive element 37 can be realized either geometrically or with a chain of junctions. The ATS 7 has both of its loops flux biased in DC and AC. The DC bias sets the working point of the ATS 7. It may be operated near the so-called saddle point, which is a sweet spot in frequency and has small cross-Kerr terms.

Both the first resonant portion 29 and the second resonant portion 31 are galvanically connected to the ATS 7. The first resonant portion 29 confers the first mode a having the resonant frequency $f_a$ to the non-linear superconducting quantum circuit 3, while the second resonant portion 31 confers the second mode b having the resonant frequency $f_b$ to the non-linear superconducting quantum circuit 3.

By "galvanically coupled", it should be understood here that there are short electrically conducting portions which connect the first resonant portion 29 and the second resonant portion 31 to the ATS 7, i.e., a short electrically conducting track or any other mean ensuring a physically continuous conducting junction. The expression "short" means that the electrically conducting track has an impedance which is negligeable compared to the impedance of the ATS 7, the first resonant portion 29 and the second resonant portion 31 at the resonant frequencies $f_a$ and $f_b$.

In the embodiment of figure 4, the first resonant portion 29 includes a capacitive element 39 and an inductive element 41 which are connected in series. Similarly, the second resonant portion 31 includes a capacitive element 43 and an inductive element 45 which are connected in series.

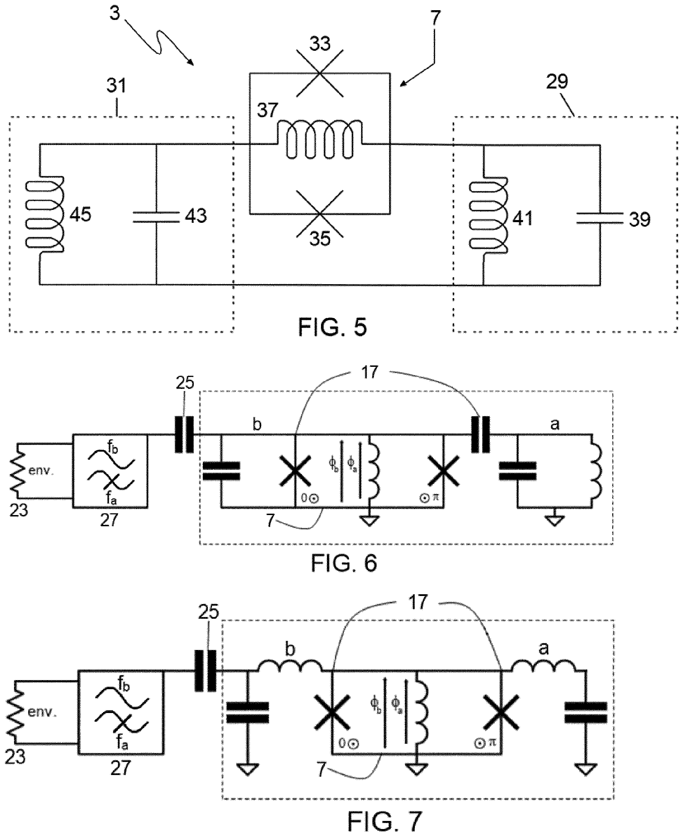

In the embodiment of figure 5, the first resonant portion 29 also includes the capacitive element 39 and the inductive element 41. However, in such embodiment, the capacitive element 39 and the inductive element 41 are connected in parallel. Similarly, the capacitive element 43 and the inductive element 45 of the second resonant portion 31 are connected in parallel.

In the respective embodiments of figures 4 and 5, the microwave linear network b/a includes two resonant portions. However, as previously explained, the microwave linear network b/a may comprise only one resonant portion which is arranged to produce both the first mode a and the second mode b.

Figures 6 and 7 illustrate several possible circuit implementations of the quantum system 1 of figure 3. Contrary to figure 4 and figure 5, the external environment is represented. The ATS 7 serves as a central reference point to which the rest of the components are connected. The filtering and environment of the second mode b, i.e. the buffer mode, are also present to this end. The microwave sources have been omitted for simplicity but are arranged in the same way as in figure 3 to run the circuit.

In figure 6, the linear microwave network b/a is formed by a capacitor galvanically coupled to the ATS 7 to form the buffer mode b, and a parallel LC resonator strongly capacitively coupled to the ATS 7 to form the bosonic qubit mode a. The couplings to the ATS 7 form the linear coupler 17. Both first mode a and second mode b are strongly coupled to the ATS 7 as shown by the zero-point fluctuation of the phase of the two modes in central inductance of the ATS 7. The buffer is coupled to the outside environment by a capacitance 25.

In figure 7, the linear microwave network b/a consists of two series LC resonators galvanically coupled to the ATS 7 to form the buffer mode b and the bosonic qubit mode a. Both first mode a and second mode b are strongly coupled to the ATS 7 as shown by the zero-point fluctuation of the phase of the two modes in central inductance of the ATS 7. The buffer is coupled to the outside environment by a capacitance 25. It can be noted that the diagram of the ATS 7 and the linear microwave network b/a corresponds to that illustrated in figure 4, the bosonic qubit mode a corresponding to the first resonant portion 29 and the buffer mode b corresponding to the second resonant portion 31.

In the present invention, the non-linear superconducting quantum circuit 3 engineers a Hamiltonian H expressed

$$H/\hbar = g_2(a^2 + \lambda a^\dagger a - \alpha^2)b^\dagger + \mathrm{h.\,c.}$$

as in response to the parametric drive of the four-wave mixing non-linear element 7 with a radiation at a frequency $|2f_a - f_b|$ delivered by the first microwave source 11, the parametric drive of the four-wave mixing non-linear element 7 with a radiation at a frequency $f_b$ delivered by the second microwave source 13 and the drive of the second mode b with a radiation at a frequency $f_b$ delivered by the third microwave source 15 or, alternatively, by the microwave source 19, the respective phases of the second microwave source 13 and the third microwave source 15 being substantially equal to each other. The Hamiltonian H yields through dissipation of the second mode b the effective dissipator $D[a^2 + \lambda a^\dagger a - \alpha^2]$ which stabilizes the two-dimensional manifold hosting the bosonic qubit.

If the respective phases of the microwave sources 13 and 15 (or alternatively 19) are properly tuned as explained above, $\lambda$ and $\alpha^2$ possess the same complex phase, and can thus be taken real without loss of generality. Thus, unless otherwise stated, $\lambda$ and $\alpha$ are assumed to be real numbers.

In analogy with the even and odd cat states $|C_\alpha^\pm\rangle$, the even, respectively odd, bosonic state of the bosonic qubit hosted by the two-dimensional manifold stabilized using the quantum system 1 is a superposition of bosonic states that contain only even, respectively odd, Fock states. The expansion on Fock basis of the even bosonic state $|C_\alpha^+\rangle_{BS}$ and the odd bosonic state $|C_\alpha^-\rangle_{BS}$ is the following:

$$|C_\alpha^+\rangle_{BS} = N^+ \sum_{m \geq 0} \mu_{2m} |2m\rangle$$

with:

$$\mu_{2m} = \frac{1}{\sqrt{2m!}} \prod_{q=0}^{m-1} (\alpha^2 - 2\lambda q) \ \forall \ m > 0$$

$$\mu_0 = 1$$

and:

$$|C_\alpha^-\rangle_{BS} = N^- \sum_{m \geq 0} \mu_{2m+1} |2m + 1\rangle$$

with:

$$\mu_{2m+1} = \frac{1}{\sqrt{(2m+1)!}} \prod_{q=0}^{m-1} (\alpha^2 - \lambda(2q+1)) \ \forall \ m > 0$$

$$\mu_1 = 1$$

where: $N^+$ and $N^-$ are normalization constants.

The figure of merit of the implementation of the quantum system 1 is the relative amplitude of the term $a^2 b^\dagger$ and $a^\dagger a b^\dagger$. In this regard, if a comparison between the bosonic qubits of the present invention and the theoretical squeezed cat qubits could be established, $\lambda$ could be expressed as a function of the complex squeezing parameter $\xi = re^{i\theta}$ as follows:

$$\lambda = 2\tanh(r)$$

Like for the squeezed cat, the bit-flip probability is exponentially decreased by increasing the value of $\lambda$ - or equivalently $r$ for the squeezed cat.

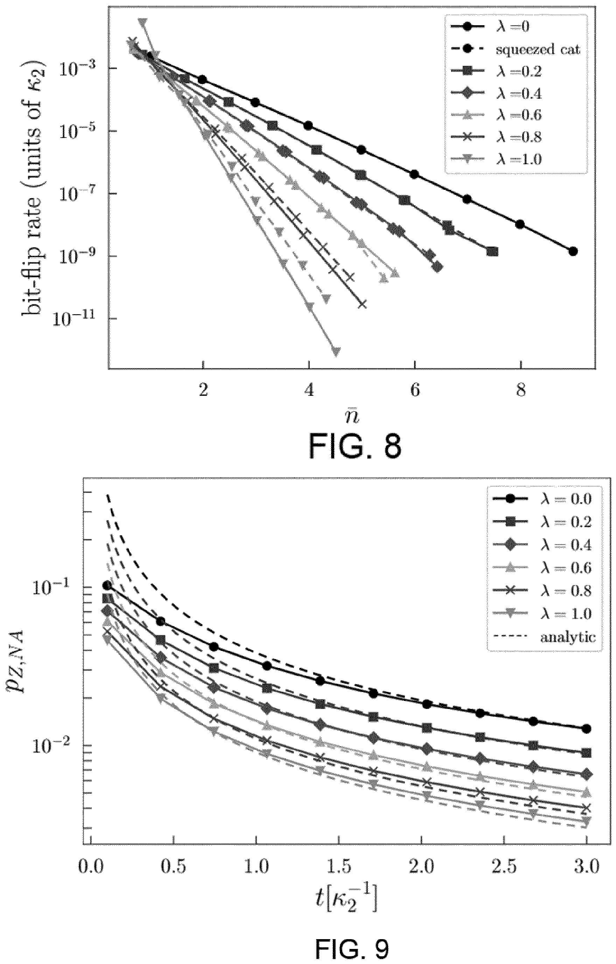

Figure 8 illustrates the bit-flip probability as a function of the number of photons and for different values of $\lambda$. More particularly, for each value of $\lambda$, there is a solid line which corresponds to the bit-flip rate of the bosonic qubit stabilized by quantum system 1 and a dotted line which corresponds to the bit-flip rate of the comparable squeezed cat qubit. By "comparable", it should be understood here that, for a given value of $\lambda$, we consider the squeezed cat qubit obtained with a parameter $r = tanh^{-1}(\lambda/2)$ in accordance with the preceding formula.

It appears that, for $\lambda = 1$ and at a number of photons $\bar{n} = 4$, the bit-flip of the bosonic qubit stabilized by the quantum system 1 is improved by six orders of magnitude compared to the bit-flip of the standard cat qubit at the same number of photons.

Figure 8 shows that, in the case in which the value of $\lambda$ is less than or equal to 1, the proposed quantum system 1 - in solid line - involves the same improvement in terms of bit-flip as the squeezed cat - dotted lines - or even slightly better.

As previously explained, the phase and amplitude of the complex number $\lambda$ both result from the amplitude of the radiation induced by the second microwave source 13. Advantageously, the amplitude of the radiation induced by the second microwave source 13 is tuned so that $\lambda$ is equal to 1. Beyond this value, the bosonic qubit stabilized by quantum system 1 is affected by a saturation phenomenon and its performance is therefore less good than the theoretical performance of the squeezed cat qubit.

The quantum system 1 also shows less non-adiabatic errors during the implementation of the gate. The description below focuses on the Z gate, but it can be directly generalized to the CNOT gate.

During the implementation of a Z gate with a known cat qubit, i.e. a cat qubit stabilized by generating only the first term $a^2 b^\dagger$ and the fourth term $\alpha^2 b^\dagger$, two kinds of error may occur:

- the single photon loss error given by $\bar{n}\kappa_1 T$, where $\bar{n}$ is the number of photons in the cat states, $\kappa_1$ is the single photon loss and T is the duration of the gate,

- the non-adiabatic errors due to the fact that the gate is performed in a finite time $\dfrac{\pi^2}{16\bar{n}^2 \kappa_2 T}$, where $\kappa_2$ is the two-photon exchange rate. The non-adiabatic errors prevent to perform the gate as fast as possible in order to avoid the increasing of the single photon loss.

A compromise has to be found between the single photon loss error and the non-adiabatic errors since the former is proportional to the duration of the gate, whereas the latter is proportional to the inverse of the duration.

The quantum system 1 has less non-adiabatic errors than the known cat qubit. The non-adiabatic errors of the quantum system 1 during a Z gate are given by the following formula:

$$\frac{\pi^2 \dfrac{1}{(1 - \lambda^2/4)^2}}{16\left(\bar{n} - \dfrac{\lambda^2}{4\left(1 - \dfrac{\lambda^2}{4}\right)}\right)^2 \left(\dfrac{1 + \dfrac{\lambda}{2}}{1 - \dfrac{\lambda}{2}}\right)^2 \kappa_2 T}$$

Figure 9 shows simulations of the non-adiabatic errors of the quantum system 1 during a Z gate as a function of the gate time in unit of $1/\kappa_2$ and for a fixed number of photons $\bar{n} = 4$. It can be seen that, when the value of $\lambda$ increases, the non-adiabatic errors are reduced. The solid lines show numerical simulations and the dotted lines the formula above-mentioned.

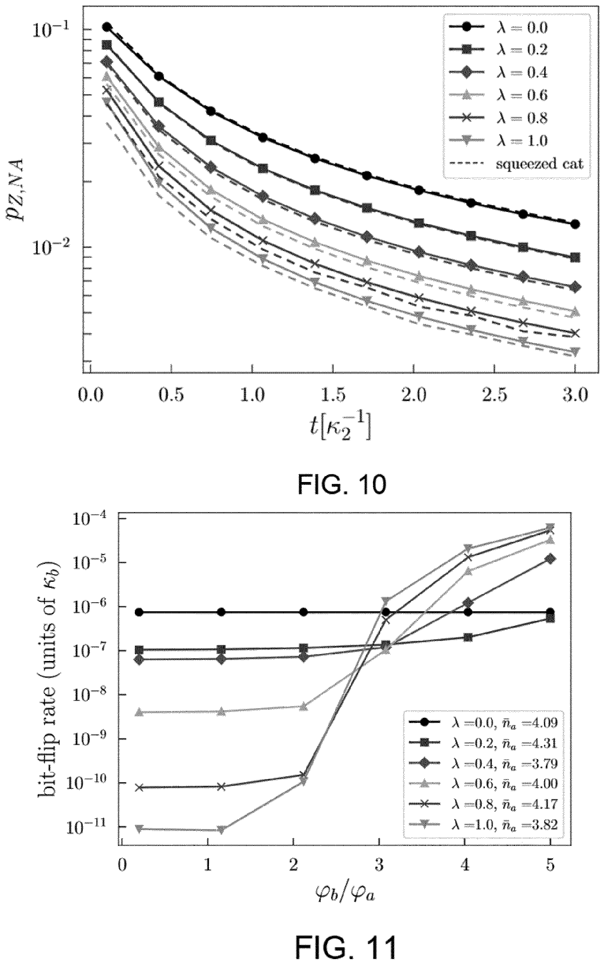

Figure 10 illustrates a comparison of the non-adiabatic errors between the bosonic qubit stabilized by the quantum system 1 - solid lines - and the squeezed cat qubit - dotted lines -, and shows that the quantum system 1 performs as well as the squeezed cat qubit.

The way the bosonic qubit is stabilized by the quantum system 1 implies that a spurious term of the form $b^\dagger b(b^\dagger + b)$ is activated by the microwave source 13, where b is the photon annihilation operator of the second mode b, that is dissipative. However, this spurious term is not detrimental to the quantum system 1 if its amplitude is small enough.

As mentioned above, its amplitude is proportional to $\hbar g_2 \lambda \dfrac{\varphi_b^2}{2\varphi_a^2}$, where $\varphi_a$ and $\varphi_b$ are the zero-point fluctuations of the superconducting phase of the first mode a and the second mode b respectively across the ATS, and where $g_2\lambda$, is the amplitude of the sought-for longitudinal coupling.

Finally, figure 11 illustrates the bit-flip rate of the bosonic qubit stabilized by the quantum system 1 as a function of the ratio $\dfrac{\varphi_b}{\varphi_a}$ with a photon number approximately given by $\bar{n}_a = 4$ in the memory mode a. The different approximate values of $\bar{n}_a$ in this figure are due to the fact that, in practice, this value is difficult to fix. This figure clearly shows that, as long as $\dfrac{\varphi_b}{\varphi_a} < 3$, the bosonic qubit stabilized by the quantum system 1 preserves an advantage over the standard cat qubit. More particularly, the curve corresponding to the standard cat qubit is that obtained for $\lambda = 0$.

It should be noted that this threshold value for $\dfrac{\varphi_b}{\varphi_a}$ depends in a non-trivial manner on the noise parameters of the quantum system 1 and on the ratio $\dfrac{g_2}{\kappa_b}$.

In figure 11, the curves correspond to the following experimentally relevant parameters:

- a ratio $\dfrac{g_2}{\kappa_b} = 0.1$,

- the photon loss rate of the mode b $\frac{\kappa_b}{2\pi} = 60$ megahertz (MHz),

- the photon loss rate of the mode a $\frac{\kappa_a}{2\pi} = 0.05$ megahertz (MHz),

- a dephasing rate of the mode a $\frac{\kappa_\phi}{2\pi} = 0.01$ megahertz (MHz), and

- a thermal population of the mode a $n_{th}$ = 1%.

**Claims**

1. A quantum system (1) for stabilizing a bosonic qubit comprising:

   - a command circuit (5) including a first microwave source (11), a second microwave source (13) and a third microwave source (15) each for delivering microwave radiation, and
   - a non-linear superconducting quantum circuit (3) including a four-wave mixing non-linear element (7) and at least one resonant portion (9) to which said four-wave mixing non-linear element (7) is connected, said non-linear superconducting quantum circuit (3) having a first mode (a) with a first resonant frequency and a second mode (b) with a second resonant frequency, said second mode (b) being dissipative, the four-wave mixing non-linear element (7) being arranged such that, when

      • the first microwave source (11) delivers radiation at a frequency equal to the absolute value of the difference between twice the first resonant frequency and the second resonant frequency to parametrically drive the four-wave mixing non-linear element (7),
      • the second microwave source (13) delivers radiation at a frequency equal to the second resonant frequency to parametrically drive the four-wave mixing non-linear element (7), and
      • the third microwave source (15, 19) delivers radiation at a frequency equal to the second resonant frequency to the a least one resonant portion (9) to drive the second mode (b),
      with the respective phases of the second microwave source (13) and the third microwave source (15, 19) being substantially equal to each other,

   the non-linear superconducting quantum circuit (3) engineers a Hamiltonian H expressed as

   $$H/_\hbar = g_2(a^2 + \lambda a^\dagger a - \alpha^2)b^\dagger + \mathrm{h.c.}$$

   , where $g_2$ is the amplitude of the first microwave source (11), a is the annihilation operator of the first mode (a), $\lambda$ is a complex number which phase and amplitude result from the amplitude of the radiation induced by the second microwave source (13), $\alpha$ is a complex number resulting from the third microwave source (15), $b$ is the annihilation operator of the second mode (b), and h. c. is the Hermitian conjugate, said Hamiltonian H yielding through dissipation of the second mode (b) an effective dissipator $D[a^2 + \lambda a^\dagger a - \alpha^2]$ which stabilizes a two-dimensional manifold hosting the bosonic qubit.

2. The quantum system (1) of claim 1, wherein the four-wave mixing non-linear element (7) is an asymmetrically threaded superconducting quantum interference device having flux lines through which radiation can be delivered to modulate a common flux and/or a differential flux.

3. The quantum system (1) of claim 2, wherein the asymmetrically threaded superconducting quantum interference device has flux lines through which radiation can be delivered to modulate at least the common flux, and wherein the first microwave source (11) and the second microwave source (13) are both arranged to deliver radiation through said flux lines to modulate said common flux at frequencies respectively equal to the absolute value of the difference between twice the first resonant frequency and the second resonant frequency and the second resonant frequency.

4. The quantum system (1) of claim 2 or 3, wherein the asymmetrically threaded superconducting quantum interference device has flux lines through which radiation can be delivered to modulate at least the differential flux, and wherein the third microwave source (19) is arranged to deliver radiation through said flux lines to modulate said differential flux at a frequency equal to the second resonant frequency to drive the second mode (b).

5. The quantum system (1) of one of claims 1 to 3, wherein the third microwave source (15) is arranged to deliver radiation at a frequency equal to the second resonant frequency to drive the second mode (b).

6. The quantum system (1) of one of the preceding claims, wherein the second microwave source (13) is arranged to deliver radiation whose amplitude causes $\lambda$ to have an amplitude less than or equal to 1.

7. The quantum system (1) of claim 6, wherein the second microwave source (13) is arranged to deliver radiation whose amplitude causes $\lambda$ to have an amplitude substantially equal to 1.

8. The quantum system (1) of one of the preceding claims, wherein the respective phases of the first mode (a) and the second mode (b) across the four-wave mixing non-linear element (7) each have a zero-point fluctuation $\varphi_a$, $\varphi_b$, and wherein the ratio $\dfrac{\varphi_b}{\varphi_a}$ is less than 3.

9. A method for stabilizing a bosonic qubit performed by the quantum system (1) of one of the preceding claims and comprising the following operations:

   - delivering, by the first microwave source (11), radiation at a frequency equal to the absolute value of the difference between twice the first resonant frequency and the second resonant frequency to parametrically drive the four-wave mixing non-linear element (7),
   - delivering, by the second microwave source (13), radiation at a frequency equal to the second resonant frequency to parametrically drive the four-wave mixing non-linear element (7),
   - delivering, by the third microwave source (15, 19), radiation at a frequency equal to the second resonant frequency to the a least one resonant portion (9) to drive the second mode (b),
   with the respective phases of the second microwave source (13) and the third microwave source (15, 19) being substantially equal to each other,
   the implementation of said method causing the non-linear superconducting quantum circuit (3) to engineer a Hamiltonian H expressed as $H/\hbar = g_2(a^2 + \lambda a^\dagger a - \alpha^2)b^\dagger +$ h. c., where $g_2$ is the amplitude of the first microwave source (11), $a$ is the annihilation operator of the first mode (a), $\lambda$ is a complex number which phase and amplitude result from the amplitude of the radiation induced by the second microwave source (13), $\alpha$ is a complex number resulting from the third microwave source (15), $b$ is the annihilation operator of the second mode (b), and h. c. is the Hermitian conjugate, said Hamiltonian H yielding through dissipation of the second mode (b) an effective dissipator $D[a^2 + \lambda a^\dagger a - \alpha^2]$ which stabilizes a two-dimensional manifold hosting the bosonic qubit.

FIG. 1

FIG. 2

FIG. 3

FIG. 4

FIG. 5

FIG. 6

FIG. 7

FIG. 8

FIG. 9

FIG. 10

FIG. 11

Europäisches
Patentamt

European
Patent Office

Office européen
des brevets

# EUROPEAN SEARCH REPORT

**Application Number**

EP 23 17 5147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J\'ER\'EMIE GUILLAUD ET AL: "Quantum computation with cat qubits", ARXIV.ORG, CORNELL UNIVERSITY LIBRARY, 201 OLIN LIBRARY CORNELL UNIVERSITY ITHACA, NY 14853, 3 January 2023 (2023-01-03), XP091406952, * abstract; figures 10, 16 * * equations (17), (20) * * section 3 * * section 3.3, lines 2-5 * * section 4.4, lines 18-19 * * section 4.4, lines 4-7 * * page 35, line 10 - line 16 * * page 33, line 2 - line 5 * * page 35, line 33 - line 35 * * page 65, line 8 * * section 3.2, lines 7-8 * * page 34, line 17 - page 35, line 1 * * page 65, line 10 * * page 66, line 2 * * page 33, line 1 - line 5 * * page 36 * * page 66, line 12 - line 17 * ----- | 1-9 | INV. G06N10/40 G06N10/70 |
| X | RONAN GAUTIER ET AL: "Combined Dissipative and Hamiltonian Confinement of Cat Qubits", ARXIV.ORG, CORNELL UNIVERSITY LIBRARY, 201 OLIN LIBRARY CORNELL UNIVERSITY ITHACA, NY 14853, 17 February 2022 (2022-02-17), XP091147469, * figure 12 * * section VI * * Appendix E * ----- | 1-9 | TECHNICAL FIELDS SEARCHED (IPC)<br><br>G06N |

The present search report has been drawn up for all claims

| Place of search | Date of completion of the search | Examiner |
|---|---|---|
| The Hague | 10 October 2023 | Aoun, Marc |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21306965

**Non-patent literature cited in the description**

- **Q. XU et al.** Autonomous quantum error correction and fault-tolerant quantum computation with squeezed cat qubits. *arXiv:2210.13406*, 2022
- **T. HILLMANN et al.** Quantum error correction with dissipatively stabilized squeezed cat qubits. *arXiv:2210.13359, Phys. Rev. A*, 2022, vol. 107, 032423
- **R. LESCANNE et al.** Exponential suppression of bit-flips in a qubit encoded in an oscillator. *Nature Physics*, 2020
- **E. GOUZIEN et al.** Computing 256-bit Elliptic Curve Logarithm in 9 Hours with 126133 Cat Qubits. *arXiv:2502.06639*, 2023
- **Z. LEGHTAS et al.** Confining the state of light to a quantum manifold by engineered two-photon loss. *Science*, 2015, vol. 347 (6224)
- **S. TOUZARD et al.** Coherent Oscillations inside a Quantum Manifold Stabilized by Dissipation. *Physical Review X*, 2018, vol. 8, 023005